# FASCICULE DE BREVET EUROPEEN

(11) **EP 3 201 738 B1**
(45) Date de publication et mention de la délivrance du brevet: **03.06.2020**
(21) Numéro de dépôt: 15763516.0
(22) Date de dépôt: 02.09.2015
(51) Int. Cl.: G06F 3/02

(54) **DISPOSITIF DE CONTROLE/COMMANDE D'UNE PLURALITE D'ORGANES DE DIALOGUE HOMME-MACHINE**
VORRICHTUNG FÜR STEUERUNG/BEFEHL MEHRERER MENSCH-MASCHINE-DIALOGEINRICHTUNGEN
SYSTEM FOR CONTROL/COMMAND OF A PLURALITY OF MAN-MACHINE DIALOGUE DEVICES

(30) Priorité: 30.09.2014 FR 1459244
(43) Date de publication de la demande: 09.08.2017
(73) Titulaire: Schneider Electric Industries SAS, 92500 Rueil-Malmaison (FR)
(72) Inventeur: BENNI, Dominique, F-16600 Mornac (FR); CHAUVET, Francis, F-16440 Mouthiers (FR)
(74) Mandataire: Dufresne, Thierry
(86) Numéro de dépôt international: PCT/EP2015/070042
(87) Numéro de publication internationale: WO 2016/050440

(56) Documents cités:
- EP-A1- 1 703 530
- EP-A1- 3 035 166
- EP-A2- 2 781 993
- US-A1- 2003 058 623
- US-B1- 6 215 204
- US-B2- 7 528 710

## Description

### DOMAINE TECHNIQUE

L'invention concerne un dispositif de contrôle/commande d'une pluralité d'organes de dialogue homme-machine reliés en série de manière à former un réseau.

L'invention s'applique plus particulièrement, mais non exclusivement, à des organes de dialogue homme-machine tels que par exemple des voyants lumineux, des boutons tournants ou des boutons poussoirs dont l'état doit être commandé et/ou supervisé afin d'assurer la sécurité d'installation industrielle.

### ÉTAT DE LA TECHNIQUE ANTÉRIEURE

Les organes de dialogue homme-machine des dispositifs de l'art antérieur sont composés de modules unitaires reliés en série et connectés à un module maître par un bus de données. La demande de brevet EP 2 479 646 A1 décrit un dispositif comportant une première partie munie d'une unité de traitement de données et une unité d'alimentation électrique, une deuxième partie comportant plusieurs organes de dialogue homme-machine dotés chacun, d'une interface de dialogue homme-machine et un bus de communication reliant l'unité d'alimentation et l'unité de traitement à chaque organe de dialogue homme-machine.

Le document US 6 215 2014 décrit un dispositif d'arrêt d'urgence présentant une architecture modulaire.

Un inconvénient de ce système provient du fait que tous les organes de dialogue doivent être configurés au moyen d'un ordinateur ou d'un terminal spécifique. Dans ce cas, il faut affecter à chaque organe de dialogue une adresse spécifique pour que le module maître de contrôle/commande puisse leur adresser des messages spécifiques. Cette opération est contraignante pour l'installateur de ce dispositif.

Un autre inconvénient d'un tel dispositif provient du fait que dans certaines conditions industrielles à fortes perturbations électromagnétiques, les données échangées, via le bus de communication, entre les organes de dialogue homme-machine et l'unité de traitement peuvent subir des dégradations générant un risque de dysfonctionnement des appareils supervisés et de sécurité pour les utilisateurs de ces appareils.

Un autre inconvénient de ces dispositifs provient du fait que l'unité de traitement doit nécessairement disposer d'une intelligence et d'un protocole de communication pour gérer l'adressage et les échange des données.

Un but de l'invention est de pallier les inconvénients de l'art antérieur décrit ci-dessus par un dispositif robuste et simplifié.

Plus particulièrement, le but de l'invention est un dispositif permettant de connecter physiquement plusieurs organes de dialogue homme-machine à un module maître de contrôle commande sans contrainte de positionnement des organes de commande par rapport module maître de contrôle.

Un autre but est de superviser de façon sûre les états respectifs de ces organes de dialogue quel que soit le milieu industriel dans lequel ils sont utilisés.

### EXPOSÉ DE L'INVENTION

Le but de l'invention est atteint au moyen d'un dispositif de contrôle/commande d'une pluralité d'organes de dialogue homme-machine reliés en série de manière à former un réseau.

Selon l'invention, ce dispositif comporte un bloc d'interconnexion filaire relié par une liaison point-à-point à chaque organe de dialogue via un réseau de câbles torsadés.

Dans un premier mode de réalisation du dispositif selon l'invention, ledit bloc d'interconnexion filaire comporte en outre un microcontrôleur.

Dans ce mode de réalisation ledit bloc d'interconnexion comporte une ou plusieurs borne(s) de contact commune reliée(s) à chaque organe de dialogue et au moins deux séries de bornes de contact BGi, BDi, i= 1 à N, N étant un nombre entier, destinées à relier le bloc d'interconnexion à chaque organe de dialogue quelle que soit la position de ce dernier par rapport au bloc d'interconnexion.

Dans un exemple de réalisation de l'invention, chaque organe de dialogue comporte au moins un voyant lumineux ou au moins un contact électrique.

### BRÈVE DESCRIPTION DES DESSINS

D'autres caractéristiques et avantages de l'invention ressortiront de la description qui va suivre, prise à titre d'exemple non limitatif, en référence aux figures annexées dans lesquelles:
- la figure 1 illustre schématiquement une première variante d'un bloc d'interconnexion selon l'invention;
- la figure 2 illustre schématiquement une deuxième variante d'un bloc d'interconnexion selon l'invention;
- Les figures 3a à 3c illustrent schématiquement des exemples d'interconnexion d'organes de dialogue dans le dispositif selon l'invention ;
- la figure 4 illustre schématiquement un premier exemple d'interconnexion d'organes de dialogue au bloc d'interconnexion de la figure 1;
- la figure 5 illustre schématiquement un deuxième exemple d'interconnexion d'organes de dialogue au bloc d'interconnexion de la figure 1;
- la figure 6 illustre schématiquement un troisième exemple d'interconnexion d'organes de dialogue au bloc d'interconnexion de la figure 1 ;
- la figure 7 illustre schématiquement un quatrième exemple d'interconnexion d'organes de dialogue au bloc d'interconnexion de la figure 1 ;
- la figure 8 illustre schématiquement un premier exemple d'interconnexion d'organes de dialogue au bloc d'interconnexion de la figure 2 ;
- la figure 9 illustre schématiquement un deuxième exemple d'interconnexion d'organes de dialogue au bloc d'interconnexion de la figure 2 ;
- les figures 10 à 14 illustrent schématiquement des exemples d'interconnexion entre des organes de dialogue et un bloc d'interconnexion selon l'invention.

### EXPOSÉ DÉTAILLÉ DE MODES DE RÉALISATION PARTICULIERS

Dans la suite de la description, des références identiques désigneront les éléments communs aux différents modules du dispositif selon l'invention.

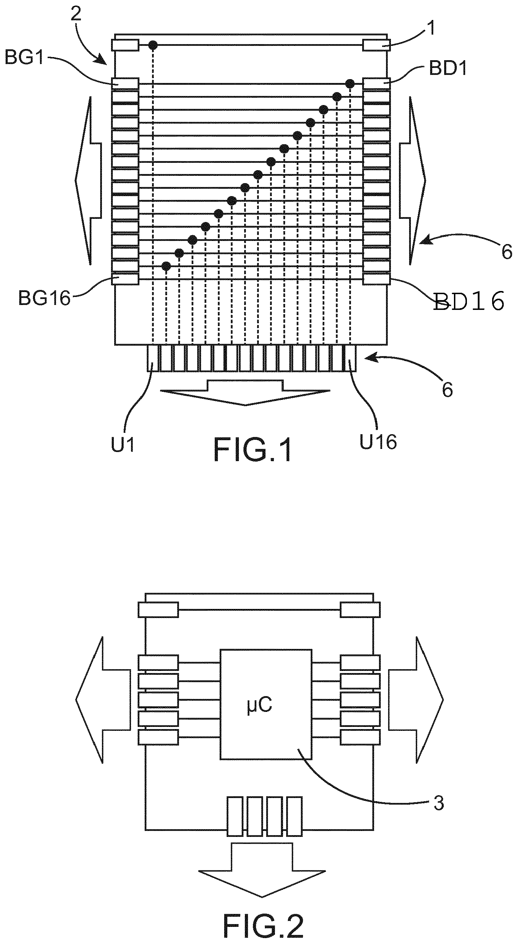

La figure 1 illustre un bloc d'interconnexion comportant une borne de contact électrique commune 1, une première série de bornes de contact électrique dite gauches BG1 à BG16, une deuxième série de bornes de contact électrique dite droites BD1 à BD16, les bornes de contact électrique gauches BG1 à BG16 sont reliées par câblage aux bornes de contact électrique droites BD1 à BD16 et à une troisième série de bornes électriques U1 à U16 de sortie vers un module de contrôle/commande externe.

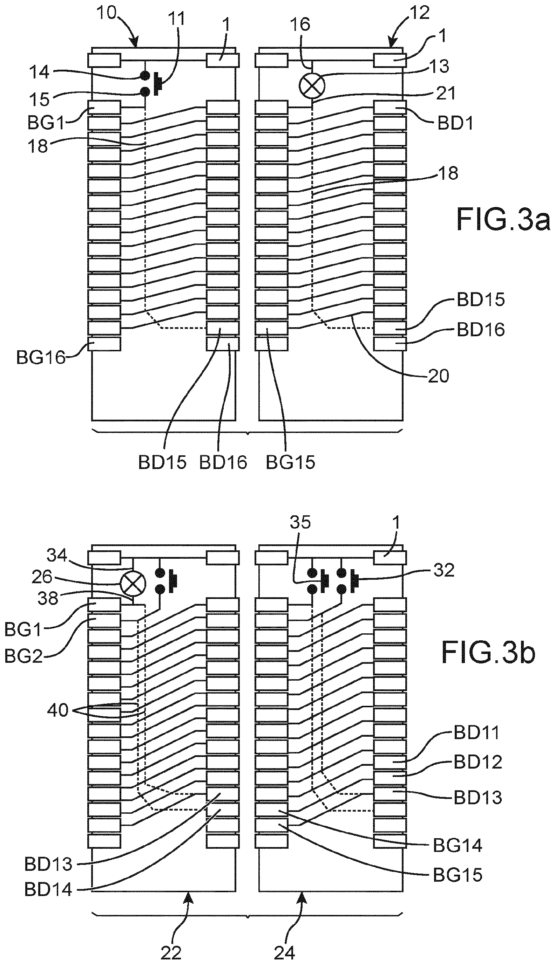

En plus d'un bloc d'interconnexion, le dispositif de contrôle/commande comporte une pluralité d'organes de dialogue connectés en série et au bloc d'interconnexion. Sur les figures 3a et 3b, chaque organe de dialogue comporte par exemple une première série de bornes de contact électrique dites gauches BG1 à BG16 et une deuxième série de bornes de contact électrique dites droites BD1 à BD16. Chaque organe de dialogue comporte au moins un élément fonctionnel, par exemple un contact éléctique ou un voyant lumineux, ou une combinaison d'un contact électrique et d'un voyant lumineux.

La figure 3a représente ainsi deux organes de dialogue 10 et 12 connectés en série. Le premier organe de dialogue 10 comporte un contact électrique 11 et le deuxième organe de dialogue 12 comporte un voyant lumineux 13. Une première borne 14 du contact électrique ainsi qu'une première borne 16 du voyant lumineux sont destinées à être reliées à la borne de contact électrique commune 1. Une deuxième borne 15 du contact électrique est reliée d'une part à la borne BG1 de l'organe de dialogue 10, et d'autre part, à la borne BD15 de cet organe de dialogue 10 au moyen d'un fil de liaison 18 (représenté en pointillé). Cette borne BD15 de l'organe de dialogue 10 est reliée à la borne BG15 de l'organe de dialogue 12 qui est elle-même reliée par câblage à la borne BD14 de cet organe de dialogue 12. Cette dernière peut être reliée au bloc d'interconnexion 2 directement ou via les bornes de contact successives d'un ou de plusieurs organes de dialogue adjacents montés en série. De même, une deuxième borne 21 du voyant lumineux 13 est reliée d'une part à la borne BG1 de l'organe de dialogue 12, et d'autre part, au moyen d'un fil de liaison 18 (représenté en pointillé) à la borne BD15 de l'organe de dialogue 12. Cette dernière peut être reliée au bloc d'interconnexion 2 directement ou via les bornes de contact successives d'un ou de plusieurs organes de dialogue adjacents montés en série.

La figure 3b représente deux organes de dialogue 22 et 24 connectés en série. Le premier organe de dialogue 22 comporte un voyant lumineux 26 et un contact électrique. Le deuxième organe de dialogue 24 comporte un premier contact électrique 35 et un deuxième contact électrique 32. Une première borne 34 du voyant lumineux 26 ainsi qu'une première borne du contact électrique sont reliées à la borne de contact électrique commune 1. Une deuxième borne 38 du voyant lumineux 26 est reliée d'une part à la borne BG1 et d'autre part, à la borne BD13 de l'organe de dialogue 22 au moyen d'un fil de liaison 40 (représenté en pointillé), la borne BD13 de l'organe de dialogue 22 est reliée à la borne BG13 du deuxième organe de dialogue 24. Cette dernière est reliée par câblage à la borne BD11 de cet organe de dialogue 24, qui peut être connectée au bloc d'interconnexion 2 directement ou via les bornes de contact d'un ou de plusieurs organes de dialogue adjacents montés en série.

De même, une deuxième borne 41 du contact électrique 28 est reliée, d'une part à la borne BG2 de l'organe de dialogue 22, et d'autre part, à la borne BD14 de l'organe de dialogue 22 au moyen d'un fil de liaison 40 (représenté en pointillé), la borne BD14 de l'organe de dialogue 22 peut être reliée à la borne BG14 du deuxième organe de dialogue 24. Cette dernière borne BG14 est reliée à la borne BD12 de l'organe de dialogue 24. Cette dernière peut à son tour être reliée au bloc d'interconnexion 2 directement ou via les bornes de contact d'un ou de plusieurs organes de dialogue adjacents montés en série.

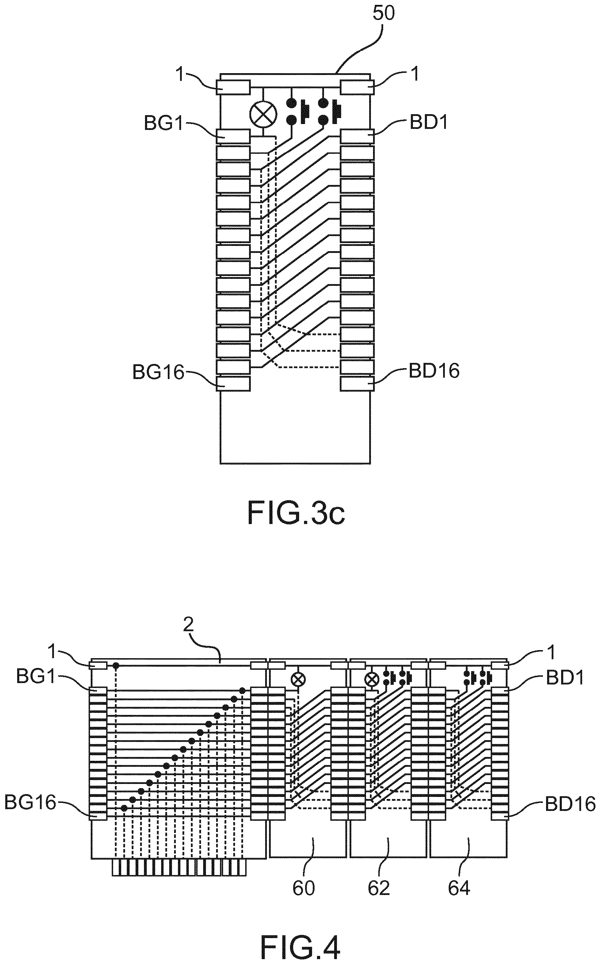

La figure 3c représente un exemple d'organe de dialogue 50 comportant un voyant lumineux, et deux contacts électriques ayant chacun une première borne reliée à la borne de contact commune 1 et des deuxièmes bornes reliées respectivement aux bornes BD13, BD14 et BD15. Ces dernières peuvent être reliées au bloc d'interconnexion 2 directement ou via les bornes de contact d'un ou de plusieurs organes de dialogue adjacents montés en série.

La figure 2 illustre schématiquement une variante de réalisation dans laquelle le bloc d'interconnexion 2 comporte une borne de contact électrique commune 1, une première série de bornes de contact électrique gauches BG1 à BG4, une deuxième série de bornes de contact électrique droites BD1 à BD4, et un microcontrôleur 3 auquel sont connectés d'un côté les bornes de contact électriques gauches et de l'autre côté les bornes de contact électriques droites. L'emploi d'un microcontrôleur dans le bloc d'interconnexion permettra notamment de mettre en oeuvre entre le bloc et chaque organe de dialogue un protocole pour lire et écrire l'état de chaque organe de dialogue qui lui est connecté.

De façon générale, l'invention s'applique dans le cas où le dispositif selon l'invention peut être utilisé pour contrôler et commander un ou plusieurs organes de dialogue homme-machine munis chacun de n bornes. La borne BG1 de chaque organe de dialogue homme-machine sera reliée à la borne commune 1 d'un bloc d'interconnexion via le contact électrique ou le voyant lumineux. Ainsi, si l'organe de dialogue ne comporte qu'un seul élément fonctionnel, chaque borne BGi est reliée à la borne BDi-1 de cet organe de dialogue. Si l'organe de dialogue comporte un deuxième élément fonctionnel, celui-ci est placé entre la borne BG2 et la borne commune 1 du bloc d'interconnexion. Si l'organe comporte trois éléments fonctionnels, chaque borne BGi est reliée à la borne BDi-3. Ainsi, dans le cas d'un seul élément fonctionnel, la borne BDn-1 est reliée à l'élément fonctionnel (contact électrique ou voyant), dans le cas de deux éléments fonctionnels, c'est la borne BDn-2 qui sera reliée à l'élément fonctionnel, et dans le cas de trois éléments fonctionnels, c'est la borne BDn-3 qui sera reliée à l'élément fonctionnel (cas d'un bouton tournant trois positions employant deux contacts électriques).

Il ressort de la description ci-dessus que tous les organes de dialogue sont reliés physiquement entre eux et au bloc d'interconnexion 2, soit directement, soit à travers d'autres organes de dialogue adjacents, de sorte que les signaux de contrôle et d'état de chacun de ces organes peuvent être échangés directement avec un module de contrôle/ commande relié au bloc d'interconnexion ou au microcontrôleur 3 de ce bloc s'il en possède un. Grâce au câblage décrit ci-dessus, plusieurs organes de dialogue peuvent être reliés en série avec le bloc d'interconnexion et échanger avec ce bloc des données quelles que soient leur positions respectives par rapport à ce bloc 2.

La figure 4 illustre un exemple de câblage dans lequel le bloc d'interconnexion 2 est monté à l'extrémité gauche d'un ensemble d'organes de dialogue 60, 62 et 64.

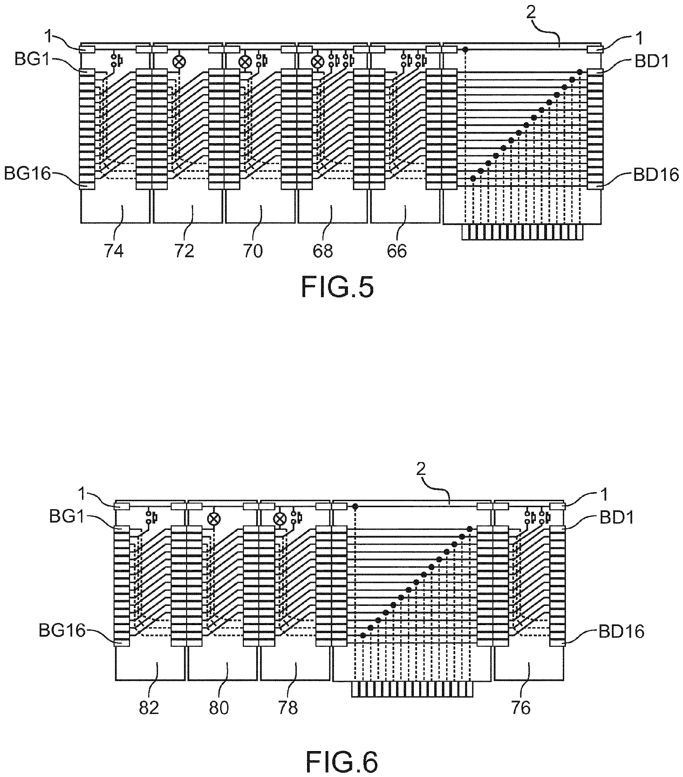

La figure 5 illustre un exemple de câblage dans lequel le bloc d'interconnexion 2 est monté à l'extrémité droite d'un ensemble d'organes de dialogue 66, 68, 70, 72 et 74.

La figure 6 illustre un exemple de câblage dans lequel le bloc d'interconnexion 2 est intercalé entre deux organes de dialogue 76 et 78 d'un ensemble d'organes de dialogue 76, 78, 80 et 82. Le bloc d'interconnexion 2 des figures 4 à 6 peut être relié à un module extérieur de contrôle/commande via les bornes U1 à U16.

Il est à noter que le bloc d'interconnexion 2 peut être muni de moyens de communication pour échanger les données avec ledit module extérieur de contrôle/commande via une la liaison sans fil.

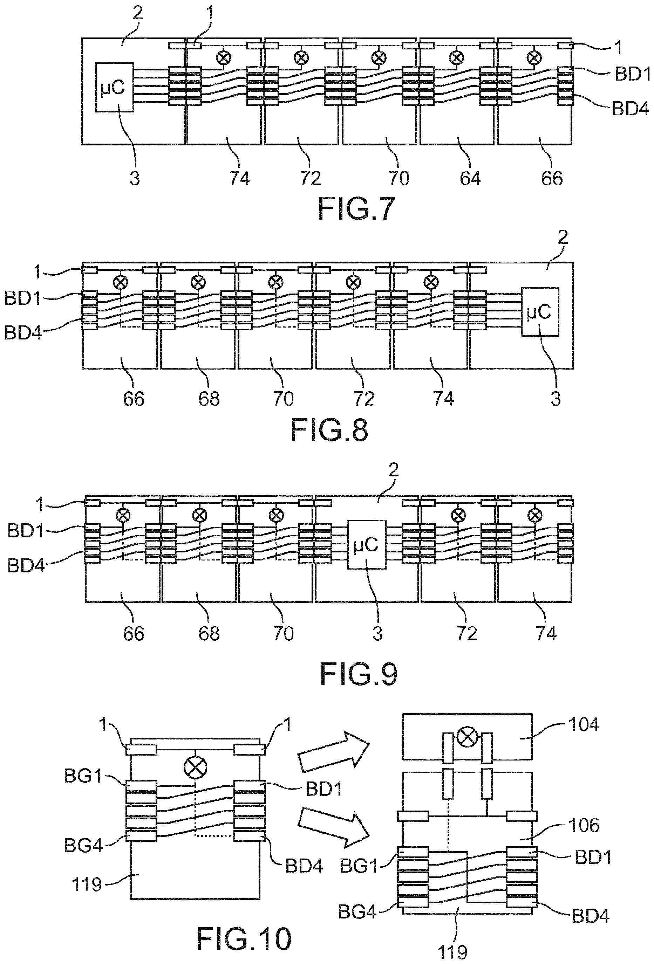

Les figures 7 à 9 illustrent des exemples de câblage des organes de dialogue avec un bloc d'interconnexion 2 muni d'un microcontrôleur configuré pour contrôler l'état de chaque organe de dialogue. Comme on peut le voir sur ces figures, le bloc d'interconnexion 2 peut être agencé à l'une des extrémités du dispositif ou entre deux organes de dialogue de ce dispositif.

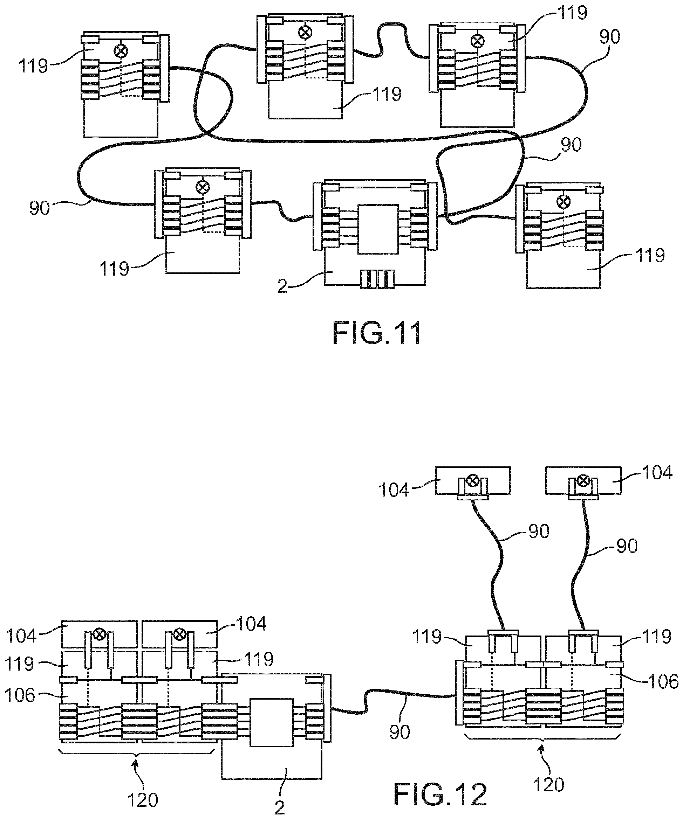

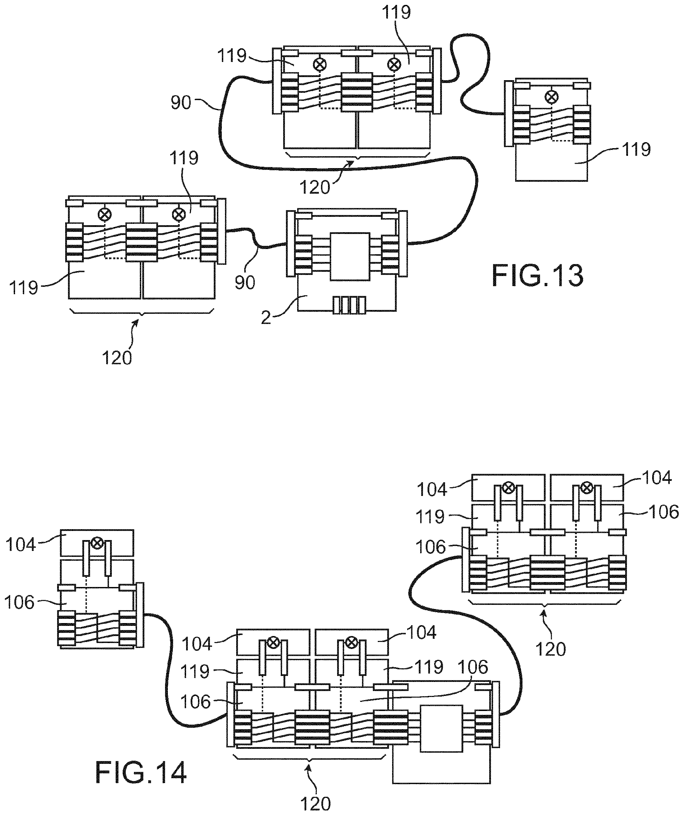

Dans une autre variante de réalisation de l'invention illustrée schématiquement par la figure 10, les éléments fonctionnels 104 des organes de dialogue 119 (voyants lumineux et contats électriques par exemple) sont désolidarisés de la partie connectique 106 et chaque organe de dialogue est relié physiquement à un autre organe de dialogue, qui ne lui est pas nécessairement adjacent, par un câble multiconducteurs 90. Le bloc d'interconnexion peut être intercalé entre deux organes de dialogue auxquels il est également relié par un câble multiconducteurs 90. Notons que deux ou plusieurs organes de dialogue adjacents peuvent être assemblés directement par leurs bornes respectives BGi et BDi pour former un bloc unitaire 120. Le bloc d'interconnexion 2 peut être intercalé entre deux blocs d'organes de dialogue 120 auxquels il peut être relié soit directement par leurs bornes respectives BGi et BDi soit par un câble multiconducteurs 90 comme cela est illustré par les figures 12 et 13.

La variante décrite ci-dessus en liaison avec la figure 10 permet de relier des organes de dialogue identiques qui sont ensuite personnalisés par l'ajout d'un élément fonctionnel de type voyant ou contact électrique. De même, selon les contraintes d'installation, l'élément fonctionnel pourra être déporté par rapport au module à l'aide d'un câble.

Pour tenir compte de l'environnement et des contraintes d'installation du dispositif selon l'invention, un microcontrôleur peut être inséré à n'importe quelle position entre deux organes de dialogue ou deux blocs d'organes de dialogue adjacents comme cela est illustré par les figures 12 à 14. Il peut être connecté aux organes de dialogue soit directement soit au moyen d'un câble multiconducteur 90.

## Revendications

1. Dispositif de contrôle/commande d'une pluralité d'organes de dialogue homme-machine (10, 12, 22, 24, 60-82), reliés en série de manière à former un réseau, **caractérisé en ce qu'**il comporte un bloc d'interconnexion filaire (2) relié à chaque organe de dialogue via un réseau de câbles torsadés, **caractérisé en ce que** ledit bloc d'interconnexion (2) est relié par une liaison point-à-point à chaque organe de dialogue et comporte au moins une borne de contact commune (1) reliée à chaque organe de dialogue, et au moins deux séries de bornes de contact BGi ; BDi, i= 1 à N, N étant un nombre entier, destinées à relier le bloc d'interconnexion à chaque organe de dialogue quelle que soit la position de chaque organe de dialogue par rapport au bloc d'interconnexion (2).

2. Dispositif selon la revendication 1 dans lequel le bloc d'interconnexion filaire (2) comporte en outre un microcontrôleur.

3. Dispositif selon la revendication 1, dans lequel chaque organe de dialogue comporte deux séries de bornes de contact électrique (BDn, BGn).

4. Dispositif selon la revendication 1 dans lequel chaque organe de dialogue comporte au moins un contact électrique (11, 28, 30, 32).

5. Dispositif selon la revendication 1, dans lequel chaque organe de dialogue comporte au moins un voyant lumineux (13, 26).

6. Dispositif selon la revendication 1, dans lequel chaque organe de dialogue comporte au moins un contact électrique (11, 28, 30, 32) et au moins un voyant lumineux (13, 26).

7. Dispositif selon la revendication 1 dans lequel les éléments fonctionnels (104) des organes de dialogue (119) sont désolidarisés de la partie connectique (106), et chaque organe de dialogue (119) est relié physiquement à un autre organe de dialogue (119) qui ne lui est pas nécessairement adjacent par un câble multiconducteurs (90), le bloc d'interconnexion (2) étant intercalé entre deux organes de dialogue (119) auxquels il est également relié par un câble multiconducteurs (90).

8. Dispositif selon la revendication 1 dans lequel au moins deux organes de dialogue adjacents (119) sont assemblés directement par leurs bornes respectives pour former un bloc unitaire (120), le bloc d'interconnexion (2) étant intercalé entre deux blocs d'organes de dialogue (120) auxquels il est relié soit directement par leurs bornes respectives soit par un câble multiconducteurs (90).

## Patentansprüche

1. Vorrichtung für Steuerung/Befehl einer Vielzahl von Mensch-Maschine-Dialogeinrichtungen (10, 12, 22, 24, 60-82), die in Reihe verbunden sind, um ein Netzwerk zu bilden, **dadurch gekennzeichnet, dass** sie einen drahtgebundenen Zusammenschaltungsblock (2) umfasst, der über ein Netzwerk aus verdrillten Kabeln mit jeder Dialogeinrichtung verbunden ist, **dadurch gekennzeichnet, dass** der Zusammenschaltungsblock (2) durch eine Punkt-zu-Punkt-Verbindung mit jeder Dialogeinrichtung verbunden ist und mindestens eine gemeinsame Kontaktklemme (1), die mit jeder Dialogeinrichtung verbunden ist, und mindestens zwei Reihen von Kontaktklemmen BGi; BDi, i = 1 bis N, wobei N eine ganze Zahl ist, umfasst, die dazu bestimmt sind, den Zusammenschaltungsblock unabhängig von der Position jeder Dialogeinrichtung mit Bezug auf den Zusammenschaltungsblock (2) mit jeder Dialogeinrichtung zu verbinden.

2. Vorrichtung nach Anspruch 1, wobei der drahtgebundene Zusammenschaltungsblock (2) ferner einen Mikrokontroller umfasst.

3. Vorrichtung nach Anspruch 1, wobei jede Dialogeinrichtung zwei Reihen von elektrischen Kontaktklemmen (BDn, BGn) umfasst.

4. Vorrichtung nach Anspruch 1, wobei jede Dialogeinrichtung mindestens einen elektrischen Kontakt (11, 28, 30, 32) umfasst.

5. Vorrichtung nach Anspruch 1, wobei jede Dialogeinrichtung mindestens eine Meldeleuchte (13, 26) umfasst.

6. Vorrichtung nach Anspruch 1, wobei jede Dialogeinrichtung mindestens einen elektrischen Kontakt (11, 28, 30, 32) und mindestens eine Meldeleuchte (13, 26) umfasst.

7. Vorrichtung nach Anspruch 1, wobei die Funktionselemente (104) der Dialogeinrichtungen (119) von dem Verbindungsteil (106) getrennt sind und jede Dialogeinrichtung (119) durch ein Mehrleiterkabel (90) physisch mit einer anderen Dialogeinrichtung (119), die nicht unbedingt an sie angrenzt, verbunden ist, wobei der Zusammenschaltungsblock (2) zwischen zwei Dialogeinrichtungen (119) angebracht ist, mit denen er ebenfalls durch ein Mehrleiterkabel (90) verbunden ist.

8. Vorrichtung nach Anspruch 1, wobei mindestens zwei aneinander angrenzende Dialogeinrichtungen (119) durch ihre jeweiligen Klemmen direkt zusammengefügt sind, um einen Einheitsblock (120) zu bilden, wobei der Zusammenschaltungsblock (2) zwischen zwei Dialogeinrichtungsblöcken (120) angebracht ist, mit denen er entweder direkt durch ihre jeweiligen Klemmen oder durch ein Mehrleiterkabel (90) verbunden ist.

## Claims

1. A device for monitoring/controlling a plurality of human-machine dialog members (10, 12, 22, 24, 60-82) connected in series so as to form a network, **characterized in that** it comprises a wired interconnection block (2) connected to each dialog member via a network of twisted cables, **characterized in that** said interconnection block (2) is connected by point-to-point link to each dialog member and comprises at least one common contact terminal (1) connected to each dialog member, and at least two series of contact terminals BGi, BDi, i = 1 to N, N being a whole number, which are intended to connect the interconnection block to each dialog member regardless of the position of each dialog member with respect to the interconnection block (2).

2. The device according to claim 1, in which the wired interconnection block (2) additionally comprises a microcontroller.

3. The device according to claim 1, in which each dialog member comprises two series of electrical contact terminals (BDn, BGn).

4. The device according to claim 1, in which each dialog member comprises at least one electrical contact (11, 28, 30, 32).

5. The device according to claim 1, in which each dialog member comprises at least one indicator light (13, 26).

6. The device according to claim 1, in which each dialog member comprises at least one electrical contact (11, 28, 30, 32) and at least one indicator light (13, 26).

7. The device according to claim 1, in which the functional elements (104) of the dialog members (119) are separated from the connection portion (106), and each dialog member (119) is physically connected to another dialog member (119), which is not necessarily adjacent thereto, by a multiconductor cable (90), the interconnection block (2) being intercalated between two dialog members (119) to which it is also connected by a multiconductor cable (90).

8. The device according to claim 1, in which at least two adjacent dialog members (119) are joined directly by their respective terminals in order to form a unitary block (120), the interconnection block (2) being intercalated between two blocks of dialog members (120) to which it is connected either directly by their respective terminals or by a multiconductor cable (90).
